# EUROPEAN PATENT APPLICATION

(11) **EP 3 533 510 A1**
(43) Date of publication of application: **04.09.2019**
(21) Application number: 18159179.3
(22) Date of filing: 28.02.2018
(51) Int. Cl.: B01D 53/72, B01D 53/86

(54) **AN EXHAUST GAS TREATMENT METHOD AND SYSTEM ARRANGED FOR TREATING EXHAUST GASES**

(71) Applicant: Infuser IP ApS, 2200 Copenhagen N (DK)
(72) Inventor: Rosenørn, Thomas, 3460 Birkerød (DK); Butcher, Andrew, 2700 Brønshøj (DK); Jensen, Kenth Wrist, 4230 Lejre (DK)
(74) Representative: Holme Patent A/S

(57) **Abstract**

The present invention relates to an exhaust gas treatment method and a system for treating an exhaust gas comprising at least one first pollutant. Said method comprises the consecutive steps of passing the exhaust gas comprising at least one first vapour phase pollutant through at least one catalytic zone arranged for reducing the concentration of said at least one first pollutant in said exhaust gas, thereby providing a first treated gas stream, and subjecting the first treated gas stream to at least one photooxidation step, providing a second treated gas stream.

## Description

The present invention relates to a method and a system for removing and/or reducing vapour phase pollutants in an exhaust gas.

Over the past decade, tremendous scientific, political, social and economic changes have impacted air quality and environmental regulations, prompting a new look at the subject of controlling hazardous air pollutant (HAP) emissions, including volatile organic compounds (VOCs).

In this respect a large number of industries have to meet specific criteria and limits in order to reduce and control emission of pollutants into the air. A large number of Regulations, Orders and Laws all over the world aims at regulating these emissions from the industry, e.g. from large combustion plants, waste incineration plants, refineries, and foundries.

As examples of vapour phase emissions that has to be removed prior to final emission into the surroundings can be mentioned, acidifying compounds, products of incomplete combustion, inorganic substances, volatile organic carbons (VOCs) including partially oxidised hydrocarbons, aromatic hydrocarbons such as BTEX (benzene, toluene, ethylbenzene and xylene), nitrogen oxides, aldehydes, isocyanate, phenol and other odorous substances, e.g. amines, organosulphates, sulphur dioxides, organophosphates, and ammonia.

As examples can be mentioned that amines are both extremely hazardous and possess a strong characteristic smell at very low concentrations; sulphur compounds, e.g. sulphur oxide is a toxic gas with a pungent, irritating smell, and organophosphates are toxic to animals, likely linked to adverse effects in the neurobehavioral development of fetuses and children, even at very low levels of exposure.

Accordingly, exposure to such emissions, may have adverse health effects, including cancer and chronic or acute disorders of the respiratory, reproductive, and central nervous systems, and emissions to surrounding air are therefore a key environmental concern.

While extraction may be a solution to remove the polluted exhaust gases directly at the work place, the different HAP and hydrocarbon emissions still have to be removed from the exhaust gases before the concentrations of pollutants is so low that the exhaust gas safely can be emitted into the surroundings.

Traditionally, the HAPs and hydrocarbons have been removed from exhaust gases using different and individual air cleaning technologies, however since the exhaust gases, and accordingly the composition and concentration of the hazardous pollutants, differ depending on the respective industrial process, exhaust gas treatment systems have to be individually constructed for the respective work place, and the exhaust gas treatment systems are therefore often complex, large and accordingly expensive both to manufacture, install, maintain and use.

For instance, even though some HAPs and VOCs can be removed from an exhaust gas by adsorption on activated carbon, the operational costs are excessive, since the activated carbon has a low regeneration ability and must be replaced frequently to work efficiently. Thus this solution is only feasible if the exhausted volume of the gas streams is small.

Another known method for removing pollutants from one or more exhaust gases are biofilters that traditionally have been applied for the removal of odorous gases, and for the removal of hydrocarbons (e.g. VOCs and BTEX) . The good performance of the filter depends on the balance between the supply of nutrient (compounds for abatement/decomposition) and the number of microorganisms. Biofiltration is based on the ability of microbes living in a fibre-peat filter bed to oxygenate malodorous gases and convert them into odourless compounds. The odorous compounds are adsorbed in the water phase and are decomposed by micro-organisms living on the filter material.

In general, while the VOC removal can be very high in a biofilter, it is likely that said biofilter only will decompose and remove a proportion of the total VOC content. There are many reasons for this, such as the reduced effectiveness of microbial decomposition within the biofilter media. Many VOCs are for instance only decomposed by a very limited range of microorganisms, which may be absent; pile conditions may become toxic to some microorganisms; and intermittent generation of specific odour compounds can lead to periodic reduced populations of the microorganisms that are required for their decomposition.

A further problem with biofiltration is that biomass may accumulate and clog the filter and packaging material thereby producing large pressure drops. Backpressure in a biofiltration system can cause excessive wear and tear on blowing equipment; air channelling will reduce the contact time between odorous air and filter medium therefore negatively affecting removal efficiencies. In winter it may further be necessary to heat the exhaust stream in order to prevent amine condensation inside the ductwork. This may be done using waste heat from compressors or from other nearby devices, but the process is complicated, requires maintenance, constant monitoring and is accordingly very expensive.

Another very common process to remove vapour phase pollutants is chemical absorption (scrubbing). For instance, amines are strong bases, and react with sulphuric or phosphoric acid. It is essential to work in a pH-range below pH 3 to avoid amine emissions. As a consequence, the scrubbing solution has to be replaced from time to time to remove concentrated salts, which subsequently require disposal as a hazardous waste. It is technically possible to process the scrubbing solution to reclaim the pollutant e.g. the amine for re-use, however the process if often expensive and time-consuming.

Thus, even though there presently exists a number of different technologies aiming at treating exhaust gases from different industries, these solutions all require large amounts of energy, are very complicated to control and maintain, and are expensive and time-consuming to use.

Accordingly, there remains a demand for improved systems for the removal of vapour phase pollutants from an exhaust gas whilst offering both a reduction in energy in order to provide a substantial complete removal of vapour phase pollutants from said exhaust gas, and a decreased complexity with regard to initiation and control of the removal process.

It is therefore a first aspect of the present invention to provide an exhaust gas treatment method and a system arranged for removing vapour phase pollutants from an exhaust gas, in a fast and effective manner using much less energy for the removal process compared to the traditional exhaust gas treatment systems and methods.

It is a second aspect of the present invention to provide an exhaust gas treatment system having a compact structure, and in which the pressure drop over the system is reduced.

It is a third aspect of the present invention to provide an exhaust gas treatment system which does not involve the use of chemical compounds, e.g. oxidizing agents or scrubbing solutions, thereby reducing both costs for the treatment process and eliminate the need for storage facilities for said chemical compounds.

It is a fourth aspect of the present invention to provide an exhaust gas treatment system arranged for removing high concentrations of vapour phase pollutants from an exhaust gas at a relatively low temperatures,

It is a fifth aspect of the present invention to provide an exhaust gas treatment system for efficiently removing high concentrations of pollutants without using scrubbing solutions, biofiltration, the use of acid resistant materials for construction, and the like.

It is a sixth aspect of the present invention to provide an exhaust gas treatment system that is inexpensive to manufacture and is simple and reliable to use.

The novel and unique features whereby these and further aspects are achieved according to the present invention is by providing an exhaust gas treatment method that comprises the consecutive steps of:
- passing an exhaust gas comprising at least one first vapour phase pollutant through at least one catalytic zone arranged for reducing the concentration of said at least one first pollutant in said exhaust gas, thereby providing a first treated gas stream, and
- subjecting the first treated gas stream to at least one photooxidation process thereby providing a second treated gas stream.

Photooxidation is a well known destruction process wherein hydrocarbons, such as VOCs, may be converted into carbon dioxide and water, i.e. the VOCs are converted into compound that safely can be emitted into the surroundings.

The inventors of the present invention have found that certain vapour phase compounds have a negative impact on the photooxidation process since these compound reduces the photooxidation process's ability to remove/decompose hydrocarbons. Thus in a preferred embodiment the at least one first vapour phase pollutant is a chemical compound that may have a negative impact on the subsequent photooxidation process.

The method according to the invention is accordingly unique in that the exhaust gas comprising said at least one first vapour phase pollutant is first passed over at least one catalytic zone, arranged for at least providing a reduction in the concentration of said first pollutant, before the thereby obtained gas stream (first treated gas stream) is subjected to at least one photooxidation process in which a second vapour phase pollutant is removed. Said second vapour phase pollutant is preferably a hydrocarbon pollutant e.g. a VOC, that either is part of the original exhaust gas and/or is generated when the exhaust gas comprising the at least one first vapour phase pollutant is passed though the catalytic zone.

Accordingly, the "pre-treatment" of the exhaust gas in the catalytic zone(s), where the concentration of the least one first vapour phase pollutant is reduced, ensures that the subsequent photooxidation process works optimally, and that the hydrocarbons can be more effectively removed in the photooxidation step(s). In a preferred embodiment the concentration of the at least one first vapour phase pollutant is preferably significantly reduced and even more preferred substantially removed, in the catalytic zone(s).

The method according to the invention thereby provides a very simplified exhaust gas treatment method for initially reducing the concentration/substantially removing at least one first vapour phase pollutant and subsequently at least one second vapour phase pollutant from an exhaust gas e.g. from an industrial process or a combustion plant. The origin of the exhaust gas is not relevant, since the method according to the present invention can be used on all kinds of exhaust gases.

Even though the method according to the invention provides a unique advantage when the exhaust gas comprises both a first vapour phase pollutant and a second vapour phase pollutant, (which may be generated in the catalytic zone), the method can also be used when the exhaust gas only comprises a first or a second vapour phase pollutant.

In a preferred embodiment the at least one first vapour phase pollutant is selected from compounds containing at least one of nitrogen, sulphur, phosphor, halogens, silicon and organometallic compounds, e.g. containing mercury.

In this respect the catalytic zone may be individually arranged for removing or reducing the concentration of the respective relevant vapour phase pollutant, and the process and system according to the invention may accordingly be constructed to meet different requirements depending on the pollutants/compounds in the exhaust gas. For instance, an exhaust gas comprising an amine as the first vapour phase pollutant may require a different catalytic zone than a exhaust gas comprising an organometallic compound as the first vapour phase pollutant.

Accordingly the system and method according to the invention can individually constructed in relation to the composition and concentration of the hazardous pollutants in the exhaust gas, and the exhaust gas treatment systems is therefore inexpensive to manufacture, install, maintain and use.

In the exhaust gas comprises at least one first vapour phase pollutant that contains nitrogen, said first vapour phase pollutant is preferable selected from amines e.g. tertiary amines, in particular dimethyl-N - ethylamine, dimethyl-N-isopropylamine, dimethyl-N-propylamine and/or triethyl amine; ammonium; nitrosamines and the like. In these embodiments, the catalytic zone is preferably arranged to facilitate reactions involving atmospheric oxygen or oxygen present in the exhaust gas where the oxygen is the oxidant. Initial tests have shown that, by bringing e.g. an amine-containing exhaust gas into contact with the surface of the catalysts in the catalytic zone, the at amine will be subjected to an oxidative decomposition, e.g. by directly oxidising the amine to organic acids, whereby the amine effectively will be removed from the exhaust gas. The resulting organic compounds, e.g. organic acids etc. will then be removed in the subsequent photooxidation step together with the remaining hydrocarbons.

Even though amines are subject to degradation by contact with free oxygen, catalytic conversion of amines has not been used for treating exhaust gases, in particular not exhaust gases that contains high concentrations of amines, such as exhaust gases collected from foundries, e.g. from cold-box processes.

The inventors of the present invention have surprisingly discovered that when the at least one pollutant contains nitrogen, preferably one or more amines, a combination of a deNOₓ-catalyst and an oxidation catalyst provides a unique and synergistic effect in which the amines can be substantially completely removed from said exhaust gas, an effect which is not observed when the exhaust gas only passes over one of said catalysts.

Thus, in a preferred embodiment for removing nitrogen containing vapour phase pollutants, e.g. amines, the catalytic zone may comprise a combination of said two catalysts, i.e. an deNOₓ catalyst and an oxidation catalyst, thereby ensuring a substantial complete removal of the amines from the respective exhaust gas. The inventors of the present invention has shown that at least 99% of the amines can be removed from an exhaust gas containing amines by means of the method according to the present invention when using a combination of a deNOₓ-catalyst and an oxidation catalyst.

The use of the catalytic zone with at least a deNOₓ catalyst and an oxidation catalyst further has the advantage that hydrocarbons (VOCs) present in the exhaust gas, also will be oxidised, and accordingly at least to some extent be removed from said exhaust gas. The system thereby provides a very simplified emission control system and process to provide catalytic reduction of e.g. amines and hydrocarbons.

The deNOₓ-catalyst is preferably a Selective Catalytic Reduction (SCR) catalyst, which is designed to convert NOₓ into nitrogen and water by using reaction reducing agents, such as ammonia (NH₃) or urea. It should be noted that both the oxidation catalysts, that e.g. allows CO to be converted into carbon dioxide, and the SCR-catalyst are well-known and widely used technologies, e.g. for treating exhaust gas-streams from combustion engines. However a combination of said catalysts has not been described or suggested for removing amines and/or hydrocarbons from an exhaust gas e.g. an exhaust gas from a combustion plant, where the exhaust gas has high concentrations of amines.

The use of the exhaust gas treatment system according to the invention enables removal of relatively high concentration of amines, preferably concentration up to 20 mg/l contained in a stream of one or more exhaust gases comprising at least VOCs and/or amines.

Furthermore, oxidative decomposition of the amines also provides a continuing purification of the catalyst. The amines are accordingly substantially completely removed from the exhaust gases without significantly adding to the level of contamination, which constitutes a distinct advantage when comparing with the used prior art technologies for removing amines and/or hydrocarbons e.g. VOCs from exhaust gases.

In a similar way as described above for a nitrogen-containing vapour phase pollutant, the at least one catalytic zone may be specifically arranged for reducing the concentration/substantially removing at least one vapour phase pollutant containing e.g. containing sulphur, phosphor, halogens, silicon and organometallic compounds, such as dimethylmercury.

As examples can be mentioned that if the at least one first vapour phase pollutant contains sulphur, e.g. oregano sulphates or reduced sulphur, the catalytic zone may in a preferred embodiment comprise one or more of the following catalysts: the Flue gas desulfurization (SNOX™)catalyst obtainable from Haldor Topsøe, Denmark; the catalysts CK-307™, the CK-428™, or CKA-3™ (carbonyl sulfide) obtainable from Haldor Topsøe, Denmark; and/or the catalysts from NOxCAT AD series 200 obtainable from BASF, New Jersey.

In a similar manner a first vapour phase pollutant containing phosphor, e.g. oreganophosphates or esters of phosphoric acid, may be removed using a catalytic zone that comprises the catalyst TK-335™ obtainable from Haldor Topsøe, Denmark. TK-335™ is characterized by high hydrodeoxygenation (HDO) activity and, at the same time, relatively low activities of hydrodesulfurization (HDS), hydrodenitrogenation (HDN) and saturation.

The concentration of a first vapour phase pollutants containing halogens can be reduced using a catalytic zone comprising one or more of the catalysts CK-306™, CK-395™, or CK-305™ obtainable from Haldor Topsøe, Denmark; the concentration of vapour phase organometallic compounds, e.g. containing mercury can be reduced using a catalytic zone comprising the Johnson Matthey's SINOx™ catalyst, said catalyst will oxidise Hg° to Hg²⁺, which easily be removed downstream of the photooxidation process; and the concentration of first vapour phase pollutants containing silicon can be reduced using a catalytic zone comprising one or more of the catalysts CK-302™, CK-322™, CKM-3324™ obtainable from Haldor Topsøe, Denmark.

Irrespectively of the individual arrangement of the catalytic zone, the inventors of the present invention has found that when the catalytic zone is operated at relatively low temperatures, i.e. between 80-225°C, preferably between 125 °C and 200 °C a very effective removal of the first pollutant e.g. amines, is provided. If the temperature is raised to temperature above 225 °C, such as about 250°C, the efficiency of the catalytic zone will be significantly reduced, which again will negatively impair the subsequent photooxidation process.

In comparison a standard regenerative catalytic oxidizer (RCO) operates at a temperature between 400-500 °C, thus the system according to the invention provides a very simple and effective means for reducing the energy needed to remove at least one first vapour phase pollutant, e.g. amines, sulphur containing compounds etc., from an exhaust gas.

Due to the relatively low operation temperature at the catalytic zone, it is not always required to heat the exhaust gas before said gas enters the catalytic zone, thereby reducing energy and cost for the treatment significantly. However in order to ensure that the conditions in the catalytic zone is optimal it is preferred that the exhaust gas to be treated has a temperature in the optimal temperature range, i.e. between 125°C and 200°C before said gas enters the catalytic zone.

The temperature of the exhaust gas will of course depend on the origin of said gas, however if said exhaust gas does not have a temperature in the optimal temperature range, e.g. between 80-225°C, it is preferred that said gas is heated before entering the catalytic zone, by passing the said gas through a temperature conditioning zone placed before the catalytic zone. Said temperature conditioning zone is arranged for providing a conditioned exhaust gas streams, i.e. an exhaust gas streams having a temperature between 80°C and 225°C, preferably between 125°C and 200°C.

In a preferred embodiment, the exhaust gas is heated in a recuperative heat exchanger followed by additional input from a burner if needed, before it is passed through the catalytic zone. However the heating of the exhaust gas can be achieved in any conventional way. It is not preferred to heat the exhaust gas above 250°C, as this may negatively influence the energy efficiency of the catalytic zone.

Even in situations where the exhaust gas to be treated has a temperature in the optimal temperature range, it may still be advantageously to pass the exhaust gas through a temperature conditioning zone, as this will ensure that the operation temperature in the catalytic zone is always optimal and that variations in the exhaust gas will not negatively influence the treatment process.

It is preferred that the temperature of the conditioned exhaust gas corresponds to the specific optimal temperature in the catalytic zone, such that when the conditioned exhaust gas enters the catalytic zone, the temperature in said zone will neither be heated nor cooled.

The catalytic zone is preferably arranged for using oxygen present in the exhaust gas as an oxidant, however if the amount of oxygen present in the exhaust gas is not sufficient for providing the desired oxidation of the amines and/or VOCs, additional oxygen may be added to the catalytic unit e.g. in a secondary air or oxygen stream.

Alternatively, or in addition, the catalytic zone may be arranged for reducing/converting/decomposing the at least one first vapour phase pollutant to one or more other compounds that preferably may be removed in the subsequent photooxidation process. However in some embodiments at least some of these generated compounds may be removed in a subsequent treatment process, located downstream (after) of the photooxidation zone, if required.

As an alternative to oxygen and/or air, ozone may be added/injected to the catalytic zone. Ozone has the advantage that it has a high oxidation potential (2.07V), making it possible to shorten the retention time in the catalytic zone and/or use smaller catalysts in said zone. In other words the investment cost for tanks and treatment plants may be reduced considerably if ozone is used as an additional oxidation agent.

Said secondary air/oxygen stream may alternatively be provided in a second gas line connected to an exhaust gas line/pipe just prior to the catalytic zone.

The catalytic zone has the advantage that it will "pre-treat" the exhaust gas in such a way that when said exhaust gas is subjected to the photooxidation process, the exhaust gas will not contain any substantial concentrations of compounds and/or substances that can have a negative influence on the photooxidation process. In this respect the first treated gas stream, i.e. the gas stream originating from the catalytic zone may be combined with one or more further additional exhaust gases which contains at least one second vapour phase pollutant, e.g. VOCs, but only insignificant concentrations of the at least one first pollutant, preferably below a threshold of 50 mgC/m³, and then subjecting the combined gas stream to the photooxidation step.

This will have the obvious advantage, that a number of different exhaust gas can be treated in combination in a single photooxidation step. If one or more of said exhaust gas initially contained amines, said amines could be removed in individual catalytic zones, before they were combined, and exhaust gases containing only small amine concentrations can be directly subjected to the photooxidation step. It is preferred that the at least one additional untreated or partly treated exhaust gas is heated to or maintained at the optimal operation temperature for the catalytic zone e.g. using a temperature condition zone.

In the photooxidation step the hydrocarbons e.g. organic acids, alcohols, and aldehydes, and primary, secondary and tertiary amines, as well as other VOCs and BTEX that remains from the catalytic zone or has been added via an additional untreated or partly treated exhaust gas, can easily be treated by the photooxidation process.

Even though a number of different VOCs removing techniques are known, and could be used for further treating the first treated gas stream, an UV-O₃ photooxidation process, i.e. the gas stream is subjected to a combination of UV and ozone (O₃), preferably simultaneously, is preferred for removing the hydrocarbons e.g. VOCs from said first treated gas stream.

The advantages of photooxidation are numerous. First of all, photooxidation is a destruction process wherein the resultant products are carbon dioxide, water, and inert salts. Thus, the second treated gas stream, which is originating from the photooxidation step, may be directly and safely emitted into the surroundings.

In combination with natural oxygen, UV light creates highly reactive radicals and ozone, which oxidises the hydrocarbons e.g. VOCs (including pollutants such as odours, solvents etc.) and eliminates them in the oxidation process. Accordingly, the process residuals do not require any additional treatment, as they might in the known systems for treating exhaust gases.

Secondly, UV-light is an energy-saving and environmentally, friendly solution, and ultraviolet radiation is powerful enough to break many covalent bonds. Alone it can degrade PCBs, dioxins, polyaromatic compounds, and BTEXs.

Finally, ozone, which is used as an oxidant in the process, is a potent oxidant, and since ozone can be generated on site (using UV-lamps) and used immediately, no storage area is required for the oxidant. It is accordingly preferred that in the photooxidation process the first treated gas stream passes a photooxidation zone wherein a number of UV-lamps is installed. Even though ozone may be produced in an ozone generator and added directly to the photooxidation, it is preferred that at least some of the UV-lamps are arranged for operating in an UV-spectrum which produces ozone, i.e. in a UV-spectrum around 185 nm. It is furthermore preferred that at least some of the UV-lamps operate in an area around 254 nm, as such UV-lamps effectively generates hydroxyl (OH) radicals. UV light further has the effect that it enhances the oxidation process

In order to ensure that the UV-lamps arranged for generating OH-radicals operate at highest efficiency, a water vapour delivery system may be installed in said photooxidation zone to increase the relative humidity and/or absolute water content of the first treated gas stream or the combined gas stream to at least above 90%. Alternatively the relative humidity of the first treated gas stream or the combined gas stream may be raised to at least above 90% before said gas stream enters the photooxidation zone.

Thus, the photooxidation process neither requires chemicals nor high temperatures, and a variety of contaminants and concentrations can be treated.

The inventors of the present invention have shown that by passing the first treated gas stream into the photooxidation zone up to 99% of the remaining concentrations of hydrocarbons such as VOCs can be efficiently removed.

Photooxidation processes are well known in the art and will not be described in further details in this application.

Even though the residuals from the photooxidation process consist mainly of carbon dioxide and water, it may in some situations be advantageously to combine the photooxidation process with additional treatment zones/methods if required, e.g. electrostatic precipitation, mechanical filtration or non-thermal plasma processes, before emitting the treated gas stream into the environment.

The present invention also relates to an exhaust gas treatment system arranged for performing the method described above.

The exhaust gas treatment system comprises:
- at least one catalytic zone in which an exhaust gas comprising at least one first vapour phase pollutant is passed over a catalytic unit arranged for reducing the concentration of said at least one vapour phase pollutant, thereby providing a first treated gas stream, and
- at least one photooxidation zone arranged downstream of the catalytic zone.

After the exhaust gas has passed through first the catalytic zone and then being subjected to the photooxidation step, the exhaust gas will be substantially free from both the at least one first and second vapour phase pollutants, after which it can be safely emitted into the surroundings.

The catalytic zone is preferably operated at a temperature between 80°C and 225°C, preferably between 125°C and 200°C.

The catalytic zone may be individually arranged in order to remove different kind of vapour phase pollutants, for instance, when the at least one first vapour phase pollutant contains nitrogen, e.g. amines, the catalytic unit preferably comprises a deNOₓ-catalyst and an oxidation catalyst.

The deNOₓ-catalyst is preferably a SCR-catalyst, wherein vanadium pentoxide (V₂O₅) the active compound, is placed on a titanium dioxide (TiO₂) carrier system. The oxidation catalyst can be a conventional CO oxidation catalyst.

Both the oxidation catalyst and the SCR catalyst are preferably coated on a honeycomb or monolithic support structure. The monolithic structure will preferably have a large number of parallel channels in order to provide a large catalyst surface area while at the same time ensure a low pressure drop over said catalytic unit.

The catalyst unit may in one embodiment be arranged as separate catalytic units/layers, e.g. one, two or three SCR catalyst layers and one, two or three oxidation catalyst layers, however in order to reduce the size of the catalytic unit and still achieve a minimal pressure drop penalty, a combination of the two catalytic functionalities in a single catalyst is preferred, e.g. by providing a combined catalyst having the desired catalytic activity.

In order to minimize the oxidation of NH₃/tertiary amines to NOₓ as well as the oxidation of other undesirable compounds such as NO to NO₂ and SO₂ to SO₃ (if such compounds are present in the exhaust gas to be treated) it is preferred to dope the SCR catalyst with a noble metal, preferably palladium.

It is known in the art of treatment of exhaust gases from combustion systems, to "dope" commercial SCR catalysts with noble metals, e.g. platinum, or palladium in order to provide an oxidation activity of said SCR catalyst. However, such a noble metal impregnation has proven to result in partial loss of SCR activity and in a less effective (i.e. more costly) use of noble metals, a problem, which is eliminated when using both a SCR catalyst and an oxidation catalyst in the system according to the present invention.

A further problem with the use of noble metal impregnation in the catalyst, is that they have a tendency of adsorbing carbon monoxide at low temperature, thereby making the noble metals ineffective and accordingly inappropriate for treatment of exhaust gases containing CO at low temperature, i.e. at temperatures below about 225°C, i.e. temperatures in the optimal temperature range for the catalytic zone.

It is accordingly preferred to keep the noble metal content in the SCR catalyst or the combined catalyst to a minimum.

One example of a catalyst material for use in the system according to the present invention for removing amines is the DNX® GTC-802 catalyst obtainable from Haldor Topsøe, Denmark. Said catalyst system is described in WO2016150465 A1. Furthermore, in said catalyst the noble metal for the CO oxidation reaction to the standard SCR titanium carrier is added in such a way that the concentration and the distribution of noble metal (i.e. palladium, Pd, in this case) are controlled to a very uniform level.

Emphasis is made that above-mentioned catalysts, including the nature, structure and/or composition, should not be seen as an exhaustive list. Other alternative catalysts for removing amines, e.g. an ammonia-slip catalyst in front of a VOC oxidation-catalyst can also be used within the scope of the present invention.

Of other alternative catalysts for removing nitrogen-containing vapour phase pollutants, e.g. amines, can be mentioned the ammonia destruction catalysts, e.g. the NOxCAT™ AD Series 300 NH₃Catalyst from BASF or the NOxCat™ VNX SCR Catalyst from BASF, or the catalysts disclosed in WO200861119 and WO200861119.

It must be stressed that even though the above catalytic material are known, they are all arranged for removing pollutants, e.g. NOₓ and CO from combustion engines, and accordingly to operate at temperatures much higher than the temperature range used in the present invention for the catalytic zone, i.e. between 80°C and 225°C, where e.g. removal of the at least one first pollutant e.g. the amines and organ sulphurs are efficiently obtained.

As the temperature of the second treated gas stream may be relatively high, it may in some situations be desired to deliver said energy to a heat exchanger e.g. in a heat exchange zone before the second treated gas stream is delivered to the surroundings.

The exhaust gas treatment system according to the invention may in an alternative embodiment comprise more than one catalytic zones placed before the photooxidation zone.

In one embodiment said catalytic zones are substantially identical and is arranged for removing the same vapour phase pollutant. This embodiment has the advantage, that if the concentration of the at least one vapour phase pollutant is not reduced sufficiently in a first catalytic zone, i.e. the remaining concentration of said pollutant will still influence the photooxidation process negatively, the concentration of the vapour phase pollutant can be further reduced in a subsequent catalytic zone, and so on, until the concentration of the at least one first vapour phase pollutant is reduced to an acceptable level, i.e. below a predetermined threshold. Even though said threshold may vary depending on the respective first vapour phase pollutant, the inventors have found that a threshold of about 50 mgC/m³ ensures that the subsequent photooxidation process is not influenced substantially by the first vapour phase pollutant.

Alternatively, if the exhaust gas comprises different kinds of vapour phase pollutants, the exhaust gas treatment system may also comprises more than one catalytic zone, and wherein each catalytic zone is arranged for reducing the concentration of an individual vapour phase pollutant, i.e. the catalytic zones will be different from each other. Accordingly, the exhaust gas treatment system can be constructed to meet different demands, depending on the pollutants/compounds in the exhaust gas such that several different vapour phase pollutants can be removed by passing the exhaust gas though different, and subsequently arranged, catalytic zones, and wherein each catalytic zone removes one or more specific pollutants, thereby providing a first treated gas stream which is then subjected to the photooxidation process. This embodiment has the further advantage that if the exhaust gas to be treated contains certain vapour phase pollutants that may negatively influence the treatment in subsequent catalytic zones, said pollutants may be removed in an upstream catalytic zone, thereby optimising the treatment process. The catalytic zone may however also be combined into a single zone, i.e. the catalytic zone comprises several catalyst arranged for removing different vapour phase pollutants.

The number of possible catalytic zone may vary depending on the relevant exhaust gas and the efficiency of said catalytic zones, but there may be e.g. two, three, four or even higher numbers of catalytic zones if required.

The exhaust gas treatment system according to the invention may also comprise both substantial identical and different catalytic zones, e.g. two catalytic zones arranged for removing a the same first vapour phase pollutant e.g. an amine, and e.g. two catalytic zones which is each arranged for removing two further vapour phase pollutants e.g. an organosulphate and an organophosphate.

In a preferred embodiment according to the present invention the exhaust gas treatment system according to the invention is arranged for being retrofitted into existing gas treating systems at the relevant work stations in plants, factories and other sites that produces gas emissions comprising at least one first vapour phase pollutant. This local gas treatment contributes to a highly improved working environment and reduces cost for expensive installation of new equipment.

The invention will be explained in greater detail below, describing only exemplary embodiments of the exhaust gas treatment system and method with reference to the drawing, in which
Fig. 1 shows schematically a first embodiment of an exhaust gas treatment system according to the present invention, and
Fig. 2 shows schematically a second embodiment of an exhaust gas treatment system according to the present invention.

The invention will be described below with the assumption that the exhaust gas is collected from an industrial plant producing exhaust gases comprising VOCs and/or amines, but it is to be understood that said exhaust gas can be produced or collected from any imaginably site. The origin of the production of the stream of the exhaust gas is immaterial to the method and system of the present invention.

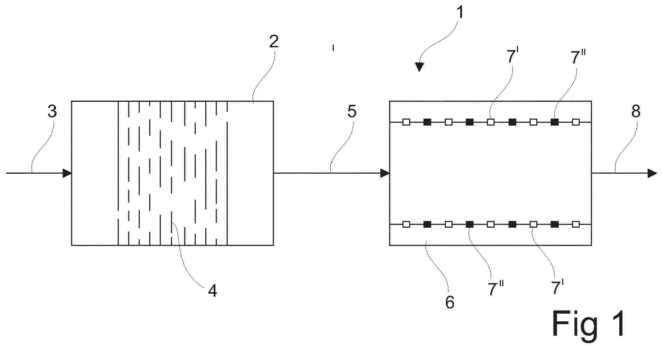

Fig. 1 shows a first simplified embodiment of a exhaust gas treatment system 1 according to the invention. Said system comprises a catalytic zone 2 in which an exhaust gas 3 comprising VOCs and amines is passed over a catalytic unit 4 comprising a deNOₓ-catalyst and an oxidation catalyst. The gas exiting the catalytic zone 2 is defined as a first treated gas stream 5, which then is passed onto a photooxidation zone 6, arranged after the catalytic zone 2, and in which the first treated gas stream 5 is subjected to a photooxidation step.

In the photooxidation zone a number of UV-lamps 7', arranged for operating in an UV-spectrum which produces ozone, i.e. in a UV-spectrum around 185 nm, and a number of UV-lams arranged for producing OH-radicals 7", are installed.

The system and method according to the invention is unique in that when the exhaust gas 3 is passed over the catalytic zone 2, the amines present in said exhaust gas is substantially completely removed. Thus, the concentration of amines in the first treated gas stream 5, has no or only a very low concentration of amines. When said first treated gas stream 5 then enters the photooxidation process the amines originally present in the exhaust gas cannot negatively influence the performance of the photooxidation step, thereby ensuring that substantially all VOCs are removed in the photooxidation zone 6.

The catalytic zone is operated at temperatures between 100-225°C, preferably between 125°C and 200°C whereby a very effective amine removal is provided. If the temperature is raised above 250°C the efficiency of the catalytic zone 2 will be significantly reduced, with the risk that amines are left in the first treated gas stream 5.

Since the catalyst unit 4 comprises a deNOₓ-catalyst and an oxidation catalyst a significant portion of the VOCs in the exhaust gas 3 will also be removed in the catalytic zone 2. However, the "pre-treatment" of the exhaust gas in the catalytic zone 2 in which the amines are removed, ensures that the subsequent photooxidation process works optimally.

Since photooxidation is a destruction process wherein the resultant products are primarily carbon dioxide, water, and inert salts, the second treated gas stream 8 originating from the photooxidation step, may be directly emitted into the surroundings.

The method and system according to the present invention thereby provides a very simplified exhaust gas treatment method and system. The system has a compact structure, and can easily can be added to existing workplaces. The system and method further have the advantage that the pressure drop over the system is small and that said system uses much less energy for the removal process compared to the traditional amine/VOC removal systems and methods.

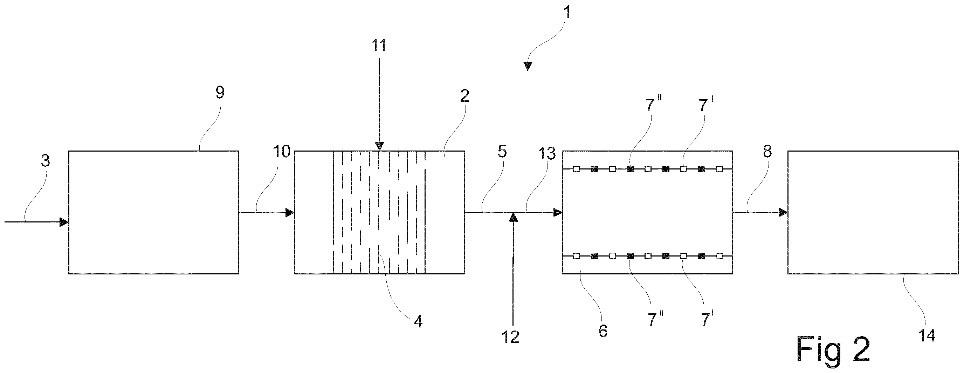

Fig. 2 shows a second embodiment of the system according to the invention. Said embodiment adds further details to the embodiment shown in fig. 1, and for like parts the same reference numbers are used.

In this embodiment the exhaust gas 3 passes through a temperature conditioning zone 9 before it enters the catalytic zone 2. Said conditioning zone 9 is arranged for providing a conditioned exhaust gas 10, i.e. a conditioned gas 10 having a temperature between 80°C and 225°C, preferably between 125°C and 200°C, such that when the conditioned gas enters the catalytic zone 2, the conditions for oxidation and accordingly amine and VOC removal are optimal.

In order to ensure that sufficient oxidant is present in the catalytic unit 4, additional oxidant 11 may optionally be added to the catalytic zone 2. Said oxidant may be secondary air or oxygen. It is however preferred that said oxidant is ozone, since it is possible to shorten the retention time in the catalytic zone 2 and/or use smaller catalytic units 4 due to the strong oxidation capabilities of ozone.

Said additional oxidant 11 may also be added to the exhaust gas just prior to the catalytic zone 2, e.g. provided in a second gas line connected to an exhaust gas line/pipe.

In order to ensure that the UV-lamps operate at highest efficiency, a water spray system (not shown) may be installed in the photooxidation zone 6 to increase the relative humidity and/or absolute water content of the first treated gas stream to at least above 90%.

The first treated gas stream 5, i.e. the gas stream originating from the catalytic zone 2 may further be combined with an additional exhaust gas 12 which contains VOCs but only insignificant concentrations of amines, thereby providing a combined gas stream 13. It is then the combined gas stream 13 which is subjected to the photooxidation process in the photooxidation zone 6.

Addition of an additional exhaust gas 12 to the first treated gas stream 5 has the advantage, that two different exhaust gases can be treated in combination in a single photooxidation zone 7. Thus, exhaust gases from processes not generating amines or only generates amines in very low concentrations, can be added to the first treated gas stream 5, and thereby reduce the overall exhaust gas treatment costs. It is in this respect preferred that also the additional exhaust gas 12 is heated to (or maintained at) the optimal operation temperature for the catalytic zone 2. In fig. 2 only a single additional exhaust gas 12 is added to the first treated gas stream 5, however this is of course not limiting, and the number of additional exhaust gases can be chosen in dependence on other parameters, e.g. the limitations of the photooxidation zone.

Even though the residuals from the photooxidation process consist mainly of carbon dioxide and water, it may in some situations, depending on the pollutants/compounds in the exhaust gas, be advantageously to subject the second treated gas stream 8 for a further treatment zone 14, e.g. electrostatic precipitation, mechanical filtration or non-thermal plasma processes, before the second treated gas stream 8 is emitted to the surroundings.

The inventors of the present invention have shown that the method and system according to the invention is capable of removing at least 99% of the amines and up to 99% of the VOCs from one or more exhaust gases from an industry.

Modifications and combinations of the above principles and designs are foreseen within the scope of the present invention.

## Claims

1. An exhaust gas treatment method arranged for removing at least one vapour phase pollutant from an exhaust gas, said method comprises the consecutive steps of:
- passing an exhaust gas (3) comprising at least one first vapour phase pollutant through at least one catalytic zone (2) arranged for reducing the concentration of said at least one first pollutant in said exhaust gas, thereby providing a first treated gas stream (5), and
- subjecting the first treated gas stream (5) to at least one photooxidation step, providing a second treated gas stream.

2. The method according to claim 1, wherein the catalytic zone (2) is arranged for being operated at a temperature between 80°C and 225°C, preferably between 125°C and 200°C.

3. The method according to claim 1 or 2, wherein the at least one first vapour phase pollutant is selected from compounds containing nitrogen, sulphur, phosphor, halogens, silicon and organometallic compounds, e.g. containing mercury.

4. The method according to claim 3, wherein the least one first vapour phase pollutant contains nitrogen, e.g. an amine, the catalytic zone (2) comprises a deNOₓ-catalyst and an oxidation catalyst.

5. The method according to claim 4, wherein the deNOₓ-catalyst is an SCR-catalyst, preferably based on vanadium pentoxide and a titanium dioxide carrier system.

6. The method according to any of the preceding claims, wherein the exhaust gas (3) is heated to and/or maintained at a temperature of between 80°C and 225°C in a temperature conditioning zone (9) placed upstream of the catalytic zone (2) seen the flow direction.

7. The method according to any of the preceding claims, wherein ozone is added to the catalytic zone (2).

8. The method according to any of the preceding claims, wherein at least one untreated or partly treated additional exhaust gas (12) comprising at least one second vapour phase pollutant, is combined with the first treated gas stream (5), thereby providing a combined gas stream (13), and wherein it is the combined gas stream (13) which is subjected to the photooxidation step, and wherein the at least one untreated or partly treated additional exhaust gas (12) optionally is not passed though the catalytic zone (2) .

9. The method according to any of the preceding claims, wherein the concentration of the at least one first vapour phase pollutant in the at least one untreated or partly treated additional exhaust gas (12) is below a threshold, wherein said second vapour phase pollutant will not negatively effect the photooxidation process, preferably said threshold is about 50 mgC/m³.

10. The method according to any of the preceding claims, wherein the photooxidation process is an UV-O₃ photooxidation process.

11. The method according to any of the preceding claims, wherein the relative humidity of the first treated gas stream (5) or the combined gas stream (13) is raised to above 90% before and/or during said first treated gas stream is subjected to the photooxidation process.

12. A exhaust gas treatment system (1) comprising
- at least one catalytic zone (2) in which an exhaust gas (3) comprising at least one first vapour phase pollutant is passed over a catalytic unit (4) arranged for reducing the concentration of said at least one first vapour phase pollutant, thereby providing a first treated gas stream (5), and
- at least one photooxidation zone (6) arranged downstream of the catalytic zone (2).

13. The system (1) according to claim 12, wherein the catalytic zone (2) is operated at a temperature between 80°C and 225°C, preferably between 125°C and 200°C.

14. The system (1) according to claim 12 or 13, wherein the exhaust gas (3) comprises at least one amine, and the catalytic zone (2) comprises a deNOₓ-catalyst and an oxidation catalyst, and wherein the deNOₓ-catalyst preferably is an SCR-catalyst, preferably based on vanadium pentoxide and a titanium dioxide carrier system.

15. The system (1) according to any of the claims claim 12 - 14, wherein the system further comprises a conditioning zone (9) arranged before the catalytic zone (2), and wherein said conditioning zone (9) comprises a heating unit arranged for heating the exhaust gas to and/or maintaining the exhaust gas at a temperature of between 80°C and 225°C.

16. The system (1) according to any of the claims claim 12 - 15, wherein the system comprises more than one catalytic zone (2) placed before the photooxidation zone (6), and wherein each of said more than one catalytic zone (2) is arranged for reducing the concentration of the same at least one first vapour phase pollutant.

17. The system (1) according to any of the claims claim 12 - 16, wherein the system comprises more than one catalytic zone (2) placed before the photooxidation zone (6), and wherein each catalytic zone (2) is different and being arranged for reducing the concentration of individual first vapour phase pollutants.

18. The system (1) according to any of the claims 12 - 17, wherein said system comprises means for combining at least one untreated or partly treated additional exhaust gas (12) comprising at least one second vapour phase pollutant, with the first treated gas stream (5), thereby providing a combined gas stream (13), and wherein it is the combined gas stream (13) which is subjected to the photooxidation step.

19. The system (1) according to any of the claims claim 12 - 18, wherein said photooxidation zone (6) comprises a number of UV-lamps (7') operating in an UV-spectrum about 185 nm in order to generate ozone, and a number of UV-lamps (7'') operating in an UV-spectrum about 254 nm in order to generate hydroxylradicals.

20. Use of the method according to any of the claims 1 - 11 or the system (1) according to any of the claims 12 - 19 for removing at least one first vapour phase pollutant and/or at least one second vapour phase pollutant from at least one exhaust gas (3).
